# EUROPÄISCHE PATENTSCHRIFT

(11) **EP 2 245 804 B1**
(45) Veröffentlichungstag und Bekanntmachung des Hinweises auf die Patenterteilung: **22.02.2012**
(21) Anmeldenummer: 08870928.2
(22) Anmeldetag: 14.11.2008
(51) Int. Cl.: H04L 12/58, H04W 4/18

(54) **VERFAHREN ZUM INTERNETBASIERTEN MESSAGING**
METHOD FOR INTERNET-BASED MESSAGING
PROCÉDÉ DE MESSAGERIE BASÉE SUR INTERNET

(30) Priorität: 16.01.2008 DE 102008004729
(43) Veröffentlichungstag der Anmeldung: 03.11.2010
(73) Patentinhaber: Deutsche Telekom AG, 53113 Bonn (DE)
(72) Erfinder: KRAMARZ- VON KOHOUT, Gerhard, 53113 Bonn (DE); RÖBKE, Matthias, 50859 Köln (DE)
(86) Internationale Anmeldenummer: PCT/EP2008/009656
(87) Internationale Veröffentlichungsnummer: WO 2009/089861

(56) Entgegenhaltungen:
- WO-A-01/41477
- WO-A-03/003694
- GB-A- 2 398 969
- US-A1- 2005 114 533

## Beschreibung

Die vorliegende Erfindung betrifft ein Verfahren zur Versendung einer Nachricht auf Basis eines Internet-Protokolls an eine beliebige Rufnummer eines Empfängers, bei dem die Empfängeradresse aus der Rufnummer des Empfängers und einer Domainergänzung gebildet und die Nachricht auf einem Nachrichten-Server hinterlegt wird, insbesondere zur weiteren Auswertung und/oder Bereitstellung für den Empfänger, wobei nach der Hinterlegung der Nachricht der Nachrichten-Server auf eine Datenbank zugreift und aus deren Daten zumindest eine der Rufnummer zuordenbare Information über eine technische Eigenschaft eines Empfängerendgerätes des Empfängers ermittelt, dem die Rufnummer zugeordnet ist, wobei in Abhängigkeit der Information eine spezifische Empfängernachricht an das Empfängerendgerät übermittelt wird. Ferner betrifft die Erfindung ein System zur Durchführung dieses Verfahrens.

Ein Verfahren der genannten Art ist aus der US 2005/114533 A1 bekannt. Sie beschreibt das Versenden einer elektronischen Textnachricht, die standardgemäß durch eine Rufnummer adressiert wird, an eine SMS Zentrale (SMSC), wobei die Textnachricht von der Zentrale als Instant Message an den Adressaten weitergeleitet wird, wenn der Adressat einen Instant Messaging Dienst aktiviert hat. Anderenfalls wird die Textnachricht im Format unverändert an den Adressaten geschickt. Des Weiteren offenbart die US 2005/114533 A1 das Weiterleiten der Textnachricht als Email, wenn der Adressat in der Zentrale eine Email Adresse hinterlegt hat, und das Erstellen der Textnachricht in einem Email-Client sowie Versenden der so erstellten Nachricht mit einer Email-Adresse der Form Rufnummer@serviceprovider.com.

Des Weiteren beschreibt die GB 2 398 969 A ein Nachrichtenmanagement zwischen Kommunikationseinheiten mit unterschiedlichen Fähigkeiten, wobei eine verbesserte Verwaltung von Nachrichten, Instant Messaging bzw. Sofortmitteilungen und Anwesenheitsdienste in existierenden Kommunikationssystemen mit nicht für einen verbesserten Dienst fähigen oder alten Clients in einem Kommunikationssystem offenbart ist. Darüber hinaus beschreibt sie ein Antworten auf eine durch einen Benutzer empfangene Anforderungsnachricht auch in solchen Anwendungen, wo das Format der in der Anforderungsnachricht bereitgestellten Senderadresse unlesbar oder durch die Benutzereinrichtung nicht erwiderbar ist.

Bei der heutigen elektronischen Telekommunikation hat die Übertragung von Nachrichten auf Basis eines Internet-Protokolls eine besonders hohe Bedeutung erlangt, weil sie besonders komfortabel in Computemetzwerken übertragen werden kann. Dabei werden verschiedene Nachrichtendienste benutzt, die unterschiedliche Protokolle verwenden. Nachrichtenübertragungsdienste sind beispielsweise E-Mail, der Sofortnachrichtenversand, auch Instant Messaging bezeichnet, darüber hinaus auch das Hochladen einer Nachricht zu einer Domain, im Folgenden Upload genannt.

Der Nachrichten-Service, welcher auf elektronischem Wege die Versendung von Informationen ermöglicht, wird daher als wichtigster und meistgenutzter Dienst des Internets angesehen. Im Falle einer E-Mail ist der Träger der Information der so genannte Body der E-Mail, welcher neben der elektronischen Textnachricht beliebige Dateianhänge wie Bilder, Musik oder Programme enthalten kann. Auch Sofortnachrichten können derartige Dateianhänge enthalten.

Aus dem Mobilfunk ist der so genannte MMS-Dienst (Multimedia Messaging Service) bekannt, der sich aus verschiedenen Gründen nicht im gleichen Maße wie der E-Mail-Service oder Sofortnachrichtenversand zu einer breit genutzten Applikation entwickelt hat. Ein Vorteil von MMS gegenüber dem E-Mail-Service ist die höhere Variabilität der Zieladresse. Eine Multimedia-Message kann als MMS an eine Rufnummer oder an eine E-Mail-Adresse versendet werden. Dies setzt jedoch ein MMS-fähiges Endgerät des Absenders voraus. Darüber hinaus muss das Endgerät des Empfängers entweder MMS-fähig sein, so dass der Empfänger eine an ihn gesendete MMS direkt abrufen und nutzen kann, oder dafür eingerichtet sein, eine elektronische Kurznachricht (SMS, Short Messaging Service) zu empfangen, so dass der Empfänger per SMS eine Internetadresse in Form eines einheitlichen Quellenanzeigers (URL, Uniform Resource Locator) empfangen kann, über den er via Internet auf die MMS zugreifen kann. Weiterhin kann der Empfänger einer MMS ohne MMS-fähiges Endgerät die empfangene MMS nicht mit einer MMS, aber auch nicht mit einer E-Mail beantworten, weil die Adresse, an die eine Antwort zu senden wäre, eine Rufnummer ist.

Für die Adresshandhabung sind dynamische Lösungen wie z.B. ENUM-baslerte Dienste (Telephone Number Mapping) bekannt, die eine Anwendung des Domainnamen-Systems (DNS) zur Übersetzung von Telefonnummern in InternetAdressen sind. Entstanden sind derartige Dienste aus der Notwendigkeit, den Anwendern von internetbasierten Sprachdiensten, auch VolP-Diensten (Voice over Internet Protokoll) genannt, sowohl im Internet als auch im klassischen Telefonnetz eine Erreichbarkeit unter derselben Nummer zu bieten. Bei ENUM-Diensten müssen jedoch das Endgerät des Anwenders mit einer entsprechenden Software ausgestattet und sämtliche Kommunikationspartner mit ihren zugehörigen Adressen für den Dienst angemeldet sein. Es können dabei lediglich diejenigen Kommunikationspartner E-Mails erhalten, die eine E-Mail-Adresse als Kontaktadresse hinterlegt haben. Diese Dienste sind daher auf kleine Gruppen beschränkt und somit unbefriedigend.

Aus der deutschen Offenlegungsschrift DE 199 36 855 A1 ist es bekannt, ein öffentliches leitungsgebundenes Fernsprechnetz bereitzustellen, das grundsätzlich allen Teilnehmern, unabhängig von einer speziellen gerätetechnischen Ausstattung, die Möglichkeit einer Textkommunikation bietet, wobei die Textkommunikation mittels Textnachricht im Format einer E-Mail erfolgen kann. Es wird dabei vorgeschlagen, jedem Fernsprechteilnehmer netzintern eine eigene E-Mail-Adresse zuzuordnen, die im Format "Teilnehmer-Rufnummer im E.164-Format @ operator.country" gebildet ist. Die Zustellung der E-Mail kann dabei allein unter Verwendung der Teilnehmerrufnummer erfolgen, wobei ein Mail-Server des Absenders die Aufgabe der Zustellung der E-Mail nach einer Text-Sprache-Konvertierung übernimmt und die Zustellung durch die Ausgabe der sprachkonvertierten E-Mail über die Hörkapsel eines beliebigen Telefons erfolgt.

Von erheblichem Nachteil ist hierbei, dass der Text der E-Mail für die Zustellung in eine Sprachnachricht umgewandelt werden soll. Eine solche Umwandlung setzt grundsätzlich eine reine Textnachricht voraus, ist im Übrigen ressourcenaufwändig und wäre insbesondere bei grafisch ausgestalteten E-Mails sowie bei E-Mails mit Dateianhängen grundsätzlich nicht möglich. Die Umwandlung in eine Sprachnachricht erfolgt prinzipbedingt selbst dann, wenn das Endgerät des Empfängers in der Lage wäre, nicht nur Sprachnachrichten, sondern auch Datennachrichten entgegenzunehmen. Weiterhin ist es von Nachteil, dass es sich um einen netzinterne Lösung handelt und der Absender neben der Rufnummer seines Kommunikationspartners in der Regel auch den Netzbetreiber (Operator) des Netzes des Kommunikationspartners sowie das entsprechende Land kennen muss, damit er eine E-Mail an den Kommunikationspartner versenden kann.

Für das Instant Messaging oder den Upload von Nachrichten zu einer Domain sind bislang keine Nachrichtenversendungsverfahren bekannt, die auf einer Rufnummer des Empfängers basieren.

Der vorliegenden Erfindung liegt daher die Aufgabe zugrunde, ein Verfahren zur Verfügung zu stellen, das eine netzübergreifende, standardisierte Versendung von Nachrichten auf Basis eines Internet-Protokolls, insbesondere E-Mails, Sofortnachrichten und Nachrichten mit Dateianhängen, die für das Hochladen zu einer Domain geeignet sein, an eine beliebige Rufnummer des gewünschten Empfängers ermöglicht, ohne dass der Absender die vollständige Zieladresse, d.h. den Netzanbieter des Empfängers, dessen Instant Messaging-Adresse oder die Domainadresse kennen muss, wobei insbesondere eine einheitliche, zentralisierbare internationale Verwaltung des Nachrichten-Versands möglich ist. Das Verfahren soll sich dabei mit geringem Arbeitsaufwand in bestehende Telekommunikationsnetze integrieren lassen.

Dies wird durch ein Verfahren mit den Merkmalen des Anspruchs 1 sowie durch ein System mit den Merkmalen des Anspruchs 19 gelöst. Bevorzugte Ausgestaltungen der Erfindung sind in den abhängigen Unteransprüchen gegeben und in der nachfolgenden Beschreibung erläutert.

Besonders vorteilhaft ist dabei, dass bei dem Verfahren zur Versendung einer Nachricht auf Basis eines Intemetprotokolls an einen Empfänger, insbesondere an eine beliebige Rufnummer des Empfängers, bei dem die Empfängeradresse aus der Rufnummer des Empfängers und einer Domainergänzung gebildet und die Nachricht auf einem Nachrichten-Server hinterlegt wird, insbesondere zur Auswertung und/ oder Bereitstellung für den Empfänger, der Nachrichten-Server nach der Hinterlegung der Nachricht auf eine Datenbank zugreift und aus deren Daten zumindest eine der Rufnummer zuordenbare bzw. zugeordnete Information über die technischen Leistungsmerkmale eines Empfängerendgerätes des Empfängers ermittelt, wobei in Abhängigkeit der Information eine spezifische Empfängernachricht an das Endgerät übermittelt wird. D.h., dass nach dem Empfang einer mit einer Rufnummer-Zieladresse versehenen Nachricht auf dem gemäß der Domainergänzung bestimmten Nachrichten-Server die in einer Datenbank vorgehaltenen Informationen ermittelt werden, die der Rufnummer des Empfängers zugeordnet werden können und aus denen sich der weitere Verfahrensablauf bestimmt, wobei Form und Inhalt der spezifischen Empfängernachricht, die vom Nachrichten-Server zum Endgerät des Empfängers übermittelt wird, abhängig von der entsprechend ermittelten Information, d.h. den technischen Leistungsmerkmalen sind. Bei dieser Empfängernachricht kann es sich beispielsweise um eine SMS-, Sprach-, E-Mail- oder Sofort-Nachricht handeln.

Die zu versendende Nachricht kann eine E-Mail sein, wobei in diesem Fall der Nachrichten-Server ein E-Mail-Server ist. Nach einem ersten Aspekt der Erfindung wird daher ein Verfahren zur Versendung einer E-Mail an eine beliebige Rufnummer eines Empfängers vorgeschlagen, bei dem die E-Mail-Adresse des Empfängers aus seiner Rufnummer und einer Domainergänzung gebildet und die E-Mail auf einem E-Mail-Server zur weiteren Auswertung und Bereitstellung für den Empfänger hinterlegt wird.

Alternativ kann die Nachricht eine Sofortnachricht, nachfolgend "Instant Message", abgekürzt IM, genannt, sein, wobei in diesem Fall der Nachrichten-Server ein Sofortnachrichten-Server ist, nachfolgend "Instant Messaging Server" genannt. Nach einem zweiten Aspekt der Erfindung wird daher ein Verfahren zur Versendung einer Instant-Messaging-Nachricht an eine beliebige Rufnummer vorgeschlagen, bei dem die IM-Adresse des Empfängers aus seiner Rufnummer und einer protokollgerechten Ergänzung gebildet und die Instant-Messaging-Nachricht zu einem Server zur weiteren Auswertung und Zustellung für den Empfänger übermittelt wird.

In einer weiteren Alternative kann die Nachricht sich dadurch qualifizieren, dass sie für das Hochladen (Upload) zu einer spezifischen Domain geeignet ist, wobei in diesem Fall der Nachrichten-Server ein Domain-Server ist. Eine Domain ist im Sinne der Erfindung eine über eine URL (Uniform Resource Locator) adressierbare Ressource, insbesondere ein Server, in einem Computemetzwerk, insbesondere dem Internet. Üblicherweise werden URLs wie z.B. http://www.domain.de oder http://www.subdomain.domain.de auch als Internetadressen bezeichnet. Nach einem dritten Aspekt der Erfindung wird ein Verfahren zur Versendung von Nachrichten, die für den Upload zu einer Domain geeignet sind, an eine beliebige Rufnummer eines Empfängers vorgeschlagen, wobei der Name der Domain aus der Rufnummer des Empfängers abgeleitet wird. Nachricht und zugehörige Dateianhänge werden auf einen zugehörigen Server per Upload mittels geeignetem Netzwerkprotokoll wie beispielsweise http übertragen.

Bei der Datenbank kann es sich vorzugsweise um eine Subskriptionsdatenbank für Empfänger von E-Mails, Sofortnachrichten oder Upload-Nachrichten an Rufnummern handeln, die teilnehmerspezifische Daten enthält, insbesondere Rufnummern und E-Mail-Adressen der Teilnehmer, Eigenschaften der von den Teilnehmern genutzten Endgeräte. Bei den in der Datenbank enthaltenen Endgerätedaten handelt es sich um Angaben der technischen Eigenschaften wie beispielsweise Festnetztelefon/ Mobiltelefon, audiofähig, SMS-fähig, E-Mail-fähig und/ oder IM-fähig. Die Informationen über die Endgeräte können von ihren jeweiligen Nutzern oder vom entsprechenden Netzanbieter in der Datenbank hinterlegt werden. Die Informationen können bei Bedarf aktualisiert werden, wenn beispielsweise der Nutzer sein Endgerät wechselt. Vorzugsweise kann die Information auch systemseitig abgeleitet werden, in dem eine SMS oder ein Anruf an den Netzanbieter erfolgt, welcher darauf aus der Art und Weise der Telekommunikation bzw. der hierbei genutzten Telekommunikationsdienste eine Information ableitet und sie bei der Datenbank einstellt. Erfindungsgemäß kann aus der Tatsache, dass keine spezifische Endgeräteart zu einer Rufnummer in der Datenbank ermittelt werden kann, geschlossen werden, dass dem Empfänger ein Endgerät mit einem spezifischen technischen Merkmal, z.B. ein E-Mail-fähiges Endgerät wie beispielsweise ein Mobiltelefon mit E-Mail-Software zur Verfügung steht. Auch dies ist eine Information, die erfindungsgemäß aus den vorhandenen bzw. nicht vorhandenen Daten der Datenbank ermittelt und der Rufnummer zugeordnet wird, und die den weiteren Verfahrensverlauf determiniert. Weiterhin können einer Rufnummer auch mehrere Informationen zugeordnet werden, beispielsweise endgerätespezifische Daten sowie eine oder mehrere E-Mail-Adressen.

Die E-Mail kann von einem beliebigen Endgerät mit üblicher E-Mail-Software aus erstellt und versendet werden. Eine Sofortnachricht oder Upload-Nachricht kann ebenfalls von einem beliebigen Endgerät mit üblicher Instant-Messaging-Software oder Upload-Software aus erstellt und versendet werden. Dabei kann es sich beispielsweise um einen stationären oder mobilen Computer oder um ein Mobiltelefon mit einer E-Mail- oder Instant Messaging Software handeln. Alternativ kann eine E-Mail, Instant Message oder Upload-Nachricht auch in einem Online-Portal im Internet verfasst und an die Rufnummer des Empfangsgerätes versendet werden. Im Sinne der Erfindung kann eine E-Mail auch mit einer konventionellen E-Mail-Zieladresse zunächst an einen ersten E-Mail-Server versendet worden sein, welcher entsprechend einer vom Adressaten der E-Mail auf seinem E-Mail Server hinterlegten Anweisung eine Weiterleitung an eine in der Anweisung angegebene Rufnummer des Empfängers gemäß dem vorliegenden erfindungsgemäßen Verfahren vornimmt.

Mit dem erfindungsgemäßen Verfahren ist es daher ohne besondere oder zusätzliche Software auf dem Endgerät des Absenders möglich, beliebige E-Mails, insbesondere E-Mails mit Bodys in jedwedem möglichen Format wie z.B. HTML und mit Dateianhängen, Instant Messages und Upload-Nachrichten direkt an eine Rufnummer im E.164-Format aus Mobilfunk, Festnetz oder VoIP zu verschicken. Bei einem Computer oder Mobiltelefon als Absendergerät wird im Falle einer E-Mail-Nachricht lediglich ein üblicher E-Mail-Client benötigt, d.h. eine Software zum Versenden einer E-Mail. Im Falle einer Instant Message ist lediglich eine IM-Software notwendig. Von besonderem Vorteil ist hierbei, dass es für die Versendung einer E-Mail, Instant Message oder Upload-Nachricht ausreicht, wenn der Absender eine E.164-Rufnummer aus Mobilfunk, Festnetz oder VoIP seines Kommunikationspartners kennt.

Das erfindungsgemäße Verfahren stellt auch eine wesentliche Ergänzung des MMS-Services bereit, weil nunmehr eine MMS, die an eine E-Mail-Adresse versendet wurde, vom Empfänger medienkonform, also mittels einer E-Mail an die Rufnummer des Absenders der MMS beantwortet werden kann.

Bei dem Gerätetyp des empfangenden Endgerätes für das erfindungsgemäße Verfahren kann es sich vorzugsweise um ein Festnetz- oder ein Mobiltelefon handeln, wobei das Festnetztelefon zumindest audiofähig, insbesondere aber auch SMS-fähig, das Mobiltelefon zumindest SMS-fähig, insbesondere aber auch E-Mail-fähig sein kann, d.h. einen E-Mail-Client aufweisen kann.

Bei der Empfängeradresse der E-Mail kann der Rufnummer als Domainergänzung eine vom Netzanbieter des Empfängers unabhängige Kennung hinzugefügt werden. Dies gewährleistet insbesondere, dass der Absender der E-Mail für deren Versendung nicht wissen muss, welches Netz bzw, welchen Anbieter der Empfänger nutzt. Dies ist insbesondere von Interesse, da eine einzelne Rufnummer wegen der heute üblichen Rufnummernportabilität (d.h. Kunden können den Netzbetreiber unter Beibehaltung ihrer Rufnummer wechseln) nicht mehr zwingend auf einen bestimmtem Netzbetreiber verweist. Mit einer netzanbieterunabhängigen Kennung kann daher eine netzübergreifende, standardisierte, internationale Versendung von E-Mails an beliebige Rufnummern erfolgen.

Bevorzugt kann die Hinzufügung der Kennung beim Versenden der E-Mail an die Rufnummer automatisiert erfolgen: wenn der E-Mail-Client eine Rufnummer als Ziel der E-Mail erkennt, wird die Rufnummer programmgesteuert um die für diesen Service festgelegte Kennung zu einer E-Mail-Adresse gemäß RFC2822 ergänzt. Dies hat den Vorteil, dass der Absender weder in Kenntnis der Kennung sein muss, um die E-Mail zu adressieren, noch zusätzlichen Aufwand bei der Adressierung der E-Mail hat.

Vorzugsweise kann die Kennung aus dem "@"-Zeichen gebildet werden, welchem eine neutrale, vom Netzanbieter des Empfängers unabhängige Domain folgt, der ein Punkt und eine neutrale firmen- und landesunabhängige Erweiterung nachgeordnet ist.

Alternativ kann die Kennung für die Nachrichtenübermittlung auch eine Domain aufweisen, die mit dem Netzbetreiber identifizierbar ist, wobei die Erweiterung das Land charakterisieren kann, in dem das Netz des Netzbetreibers betrieben wird, z.B. @telekom.com oder auch @telekom.de.

Im Falle einer Sofortnachricht oder Nachricht für das Hochladen zu einer Domain (Upload-Nachricht) kann die Domainergänzung aus einer ersten Teilkennung und einer zweiten Teilkennung gebildet werden, wobei die erste Teilkennung der Rufnummer vorgesetzt und die zweite Teilkennung der Rufnummer nachgesetzt wird. Bei einer Upload-Nachricht kann die erste Teilkennung http://www. und die zweite Teilkennung eine Erweiterung in Gestalt einer Top-Level-Domain sein, welcher ein Punkt vorgesetzt ist. Bei einer Sofortnachricht kann beispielsweise die erste Teilkennung sip: und die zweite Teilkennung aus einem @-Zeichen gebildet sein, welchem ein Hostname in Gestalt einer Second-Level-Domain folgt, der ein Punkt und eine Erweiterung in Gestalt einer Top-Level-Domain nachgeordnet ist.

Auch im Falle einer Sofortnachricht und einer Upload-Nachricht kann eine automatische Vervollständigung der Rufnummer um die Domainergänzung zu einer vollwertigen Zieladresse erfolgen. Insbesondere kann dies dann erfolgen, wenn die Nachricht von dem Endgerät des Absenders versendet wird, wobei entweder das Absenderendgerät oder ein diesem zugeordneter Server die Vervollständigung durchführen kann.

Erfindungsgemäß kann vorgesehen werden, dass in dem Fall, dass der Rufnummer als Geräteart ein audiofähiges Endgerät, d.h. ein nicht-SMS-fähiges Mobil- oder Festnetztelefon zuordenbar ist, die Empfängernachricht eine Sprachnachricht, also ein Anruf des Festnetztelefons oder des Mobiltelefons ist, mit welchem der Empfänger über den Eingang der Nachricht informiert sowie eine Internetadresse und bedarfsweise ein Kennwort mitgeteilt werden, unter welcher bzw. mit welchem die E-Mail, Sofortnachricht oder Upload-Nachricht abrufbar ist. Die Information über den Eingang der Nachricht sowie die Mitteilung der Internetadresse und des Kennwortes können somit durch eine Sprachnachricht erfolgen. Dies bedeutet, dass aus der Datenbank die der Rufnummer zuordenbare Information ermittelt wird, dass die in der E-Mail-Adresse, IM-Adresse oder Domainadresse enthaltene Rufnummer einem lediglich audiofähigen Endgerät zugeordnet ist, und dass die Empfängernachricht in Gestalt einer Sprachnachricht an das Festnetztelefon übermittelt wird, indem das Festnetztelefon angerufen wird. Selbiges gilt in dem Fall, dass die Rufnummer einem Mobiltelefon zugeordnet ist, welches weder über SMSnoch E-Mail-Funktionalität verfügt, so dass nur auf dem Wege der Sprache eine Nachricht an den Nutzer des Empfängergerätes übermittelt werden kann. Hiermit ist es möglich, dass auch Telefone, die nicht über die moderne elektronische Kommunikation via E-Mail, Sofortnachrichten oder Internetzugang verfügen, über den Eingang einer Nachricht informiert werden können. Das Abrufen kann dabei dadurch erfolgen, dass mit einem konventionellen Browser die mit der Empfängernachricht übermittelte Internetadresse abgerufen wird. Wenn die hier zu übermittelnde Internetadresse dem Empfänger bereits auf anderem Wege bekannt gegeben worden ist, beispielsweise schriftlich vor der ersten Nutzung des Services, so kann in der Sprachnachricht auf den Hinweis auf die Internetadresse verzichtet werden.

Weiterhin kann in dem Fall, dass der Rufnummer ein SMS-fähiges Endgerät, insbesondere ein SMS-fähiges Festnetz- oder Mobiltelefon zugeordnet ist, die Empfängernachricht eine elektronische Kurznachricht sein, mit welcher über den Eingang der Nachricht informiert sowie eine Internetadresse und bedarfsweise ein Kennwort mitgeteilt werden, unter welchen die Nachricht abrufbar ist. Wenn die hier zu übermittelnde Internetadresse dem Empfänger bereits auf anderem Wege bekannt gegeben worden ist, beispielsweise schriftlich vor der ersten Nutzung des Services, so kann in der elektronischen Kurznachricht auf den Hinweis auf die Internetadresse verzichtet werden.

Alternativ kann in dem Fall, dass der Rufnummer ein E-Mail-fähiges Endgerät, insbesondere ein E-Mail-fähiges Mobiltelefon, zuordenbar ist, die Empfängernachricht die E-Mail selbst sein. Dabei kann die E-Mail von dem E-Mail-Server unmittelbar auf das Mobiltelefon übertragen oder abgerufen werden.

Weiterhin kann alternativ in dem Fall, dass der Rufnummer ein Instant Message (IM)-fähiges Endgerät, insbesondere ein IM-fähiges Mobiltelefon, zuordenbar ist, die Empfängernachricht die Instant Message selbst sein. Dabei kann die Instant Message von dem Instant Messages-Server unmittelbar auf das Mobiltelefon übertragen oder abgerufen werden.

Weiterhin kann alternativ in dem Fall, dass aus den Daten der Datenbank die Information ermittelt werden kann, dass der Rufnummer eine "klassische" E-Mail-Adresse (d.h. Rufnummer kein Bestandteil der E-Mail-Adresse) zuordenbar ist, die E-Mail an diese Adresse weitergeleitet werden. In diesem Fall kann als Geräteart ein E-Mail-fähiges Endgerät, beispielweise ein stationärer Computer mit E-Mail-Software, angenommen werden, wobei die Weiterleitung der E-Mail als "Nachricht" in obigem Sinne zu betrachten ist, die dem Endgerät des Empfängers in diesem Fall mittelbar übermittelt wird. Eine E-Mail-Adresse kann ferner auch zusätzlich zur Geräteartinformation in der Datenbank gespeichert sein, so dass zusätzlich zur erfindungsgemäßen unmittelbaren Benachrichtigung des Endgerätes mittels der Rufnummer die E-Mail an einen weiteren E-Mail-Server weitergeleitet werden kann, womit eine zusätzliche mittelbare Benachrichtigung des Computers als Endgerät erfolgt. Der Empfänger der E-Mail kann diese dann bequem wie eine an ihn gerichtete konventionelle E-Mail abrufen.

Weiterhin kann in dem Fall, dass zu der Rufnummer in der Datenbank keine Daten über einen besonderen Gerätetyp gefunden werden können, bevorzugt davon ausgegangen werden, dass der Adressat der E-Mail diese über eine ihm bekannte Internetadresse oder mittels E-Mail-Client zumindest zeitweise abruft. In diesem Fall wird aus den Daten der Datenbank die Information gewonnen, dass das Endgerät E-Mail-fähig ist, mittels welchem der Empfänger die E-Mail selbständig abruft. Die E-Mail kann dabei auf dem E-Mail-Server zum Abruf durch den Empfänger belassen werden, so dass in Abhängigkeit dieses Sonderfalles kein weiterer Verfahrensschritt, insbesondere keine sonstige Empfängernachricht an den Empfänger folgt.

Vorteilhaft ist es, wenn im Falle einer Empfängernachricht in Form eines Anrufs oder einer SMS mit der Empfängernachricht der Betreff der E-Mail mitgeteilt wird, wobei im Falle eines Anrufs der Betreff in eine Sprachnachricht umgewandelt und vorgesprochen wird. Auf diese Weise kann der Empfänger sogleich über den Inhalt der Nachricht informiert werden und entscheiden, mit welcher Dringlichkeit er vom Inhalt der Nachricht Kenntnis erlangen muss.

Weiterhin ist es von Vorteil, wenn im Falle einer Empfängernachricht in Form eines Anrufs oder einer SMS mit der Empfängernachricht ein Kennwort mitgeteilt wird, welches unter der Internetadresse Zugang zur Nachricht gewährt. Auf diese Weise wird ein hohes Maß an Sicherheit hinsichtlich der Vertraulichkeit des Nachrichten-Inhalts gewährleistet, weil nur derjenige Zugang zur Nachricht erhält, der auch den Inhalt der SMS kennt.

Weiterhin kann vorgesehen werden, dass die Nachricht zwischengespeichert wird, wenn sie dem Empfängerendgerät nicht übermittelt werden kann. Dies kann beispielsweise dann erfolgen, wenn das Endgerät des Empfänger temporär nicht erreichbar ist, weil es z.B. ausgeschaltet ist oder über keine Konnektivität zum Netz verfügt. Es wird damit gewährleistet, dass die Nachricht nicht verloren geht.

Weiterhin kann auch vorgesehen werden, dass einzelne oder Gruppen von Rufnummern für den E-Mail-Empfang, Sofortnachrichten- und/ oder Upload-Nachrichten-Empfang vom Netzbetreiber oder vom Empfänger selbst gesperrt werden. In diesem Fall kann vor der Übermittlung der Nachricht überprüft werden, ob die Rufnummer für den Nachrichten-Empfang auf Basis eines Internet-Protokolls freigegeben oder gesperrt ist.

Bevorzugt kann dem Absender eine konventionelle E-Mail übermittelt werden, wenn die E-Mail an die Rufnummer nicht zustellbar ist. Dies kann beispielsweise dann erfolgen, wenn die Rufnummer für den E-Mail-Empfang gesperrt ist. Der Absender kann damit über den Versand oder Nichtversand der E-Mail beim Empfänger informiert werden.

Das erfindungsgemäße System zur Durchführung des Verfahrens umfasst zumindest ein erstes, absenderseitiges Endgerät zur Telekommunikation, welches zur Erstellung einer Nachricht auf Basis eines Internet-Protokolls eingerichtet ist, einen ersten Nachrichten-Server, der dem ersten Endgerät zugeordnet ist, zumindest ein zweites, empfängerseitiges Endgerät zur Telekommunikation, einen zweiten Nachrichten-Server, der dem zweiten Endgerät zugeordnet ist, und ein Telekommunikationsnetz, von welchem zumindest ein erster Teil die Nachrichten-Server miteinander und ein zweiter Teil die Endgeräte mit den ihnen zugeordneten Nachrichten-Servern verbindet, wobei dem empfängerseitigen Server eine Datenbank zugeordnet ist, in welcher eine dem Empfänger zugeordnete Rufnummer gespeichert und zumindest eine der Rufnummer zuordenbare Information über die technischen Leistungsmerkmale des zweiten Endgerätes enthalten ist. Die Information kann dabei vorzugsweise die Art des zweiten, also des vom Empfänger genutzten Endgerätes oder eine E-Mail-Adresse des Empfängers beinhalten.

Die zu versendende Nachricht kann eine E-Mail, eine Sofortnachricht oder eine für das Hochladen zu einer Domain geeignete Nachricht (Upload-Nachricht) sein. Im Falle einer E-Mail sind die beiden Server E-Mail-Server, im Falle einer Sofortnachricht, Sofortnachrichten-Server und im Falle einer Upload-Nachricht Domainserver.

Bei einer Upload-Nachricht können das erste und das zweite Endgerät jeweils ein internetfähiges mobiles oder stationäres Endgerät sein. Die Upload-Nachricht wird erfindungsgemäß zu dem Domain-Server per Upload übermittelt. Das zweite Endgerät, d.h. das Empfängerendgerät, hat Zugriffsmöglichkeit auf den zweiten Server, so dass die Upload-Nachricht von dem Empfängerendgerät abgerufen werden kann.

Das erfindungsgemäße Verfahren kann somit in besonders vorteilhafter Weise dadurch ausgeführt werden, dass eine auf dem ersten Endgerät erstellte, insbesondere mit Anhang versehene und mit der erfindungsgemäßen, von einer E.164-Rufnummer abgeleiteten E-Mail-Adresse versehene E-Mail von diesem versandt wird, wobei sie zunächst zu dem ersten E-Mail-Server gelangt, welcher dem Absender den E-Mail-Dienst bereitstellt. Die E-Mail wird dabei weiterhin über das Telekommunikationsnetz zum zweiten, empfängerseitigen E-Mail-Server übertragen. Nach ihrem Eingang erkennt dieser zweite E-Mail-Server die E.164-Rufnummer innerhalb der E-Mail Adresse und ermittelt in der dem Server zugeordneten Datenbank, welche Geräteart des empfangenden Endgerätes der Rufnummer zugeordnet ist, so dass in Abhängigkeit der in der Datenbank verfügbaren oder ermittelbaren Information über die Geräteart eine spezifische Nachricht an das zweite Endgerät übermittelt wird.

Bevorzugt kann das System Speichermittel zur Zwischenspeicherung der Nachricht aufweisen, so dass im Falle der Nichterreichbarkeit des Endgerätes die Nachricht nicht verloren geht. Entsprechendes gilt für die E-Mail selbst, damit der Empfänger genügend Zeit hat, die für ihn bestimmten E-Mails abzurufen.

Weiterhin können der erste Teil des Kommunikationsnetzes vorzugsweise durch das Internet und der zweite Teil des Kommunikationsnetzes durch ein leitungsgebundenes Fernsprechnetz oder ein Mobilfunknetz gebildet sein.

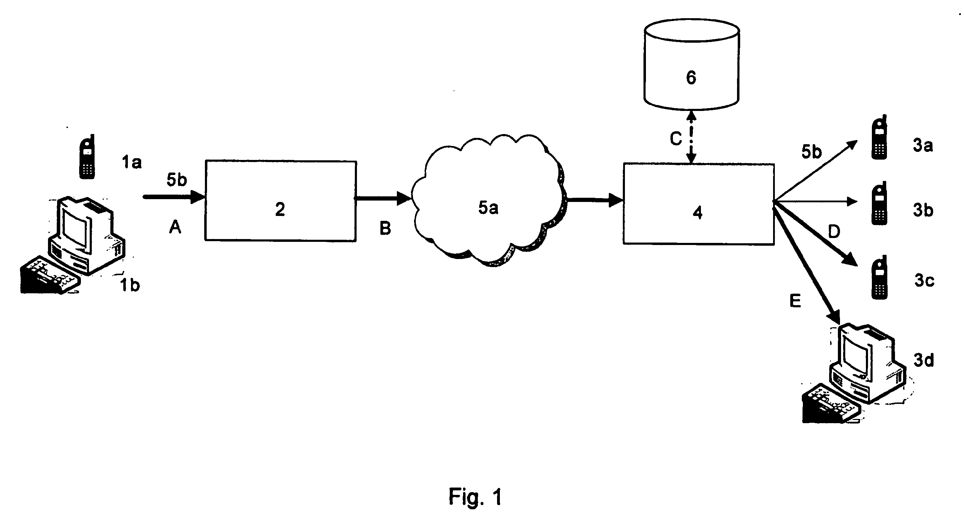

Die Erfindung wird nachfolgend anhand beispielhafter Ausführungsvarianten sowie anhand der Figur detailliert beschrieben.

Die Nachrichtenübermittlung erfolgt auf Basis von Internet-Protokollen. Den Verfahren ist gemeinsam, dass die Rufnummer des Empfängers bekannt ist. Die Art und Weise der Nachrichtenübermittlung umfasst die bekannten Dienste wie E-Mail, Instant Messaging, darüber hinaus auch den Upload zu einer Domain, ist aber grundsätzlich nicht auf die genannten Beispiele beschränkt. Die Identität des Empfängers, die für den jeweiligen Dienst verwendet wird, wird bevorzugt aus der Rufnummer des Empfängers abgeleitet. Die Verfahren berücksichtigen bevorzugt die technischen Leistungsmerkmale des Empfängerendgerätes, die neben anderen geeigneten Parametern in einer Datenbank gespeichert und der Rufnummer zugeordnet sind. Generell wird erfindungsgemäß aus der Rufnummer des Empfängers auf standardisierte Weise eine Domainergänzung in Gestalt einer dienstespezifischen Kennung des Empfängers abgeleitet. Die Zustellung oder der Abruf der Nachricht erfolgen unter Zuhilfenahme insbesondere der aus der o.a. Datenbank ermittelten Parameter.

Nachfolgend wird die erfindungsgemäße Versendung einer E-Mail erläutert:
Die Figur zeigt eine schematische Darstellung des erfindungsgemäßen Systems zur Durchführung des erfindungsgemäßen Verfahrens mit einem ersten Endgerät 1a, 1b zur Telekommunikation, welches ein Mobiltelefon 1a oder ein Computer 1b sein kann und zur Erstellung einer E-Mail eingerichtet ist, einen ersten E-Mail-Server 2, auch Ursprungs-E-Mail-Server genannt, der dem ersten Endgerät 1a, 1b zugeordnet ist, vier zweite Endgeräte 3a, 3b, 3c, 3d zur Telekommunikation, die beispielhaft mit unterschiedlichen Funktionalitäten ausgestattet sind, einen zweiten E-Mail-Server 4, auch Ziel-E-Mail-Server genannt, der den zweiten Endgeräten 3a, 3b, 3c, 3d zugeordnet ist, und ein Telekommunikationsnetz 5a, 5b, welches die Server 2, 4 miteinander und die Endgeräte 1, 3a, 3b, 3c, 3d mit den ihnen zugeordneten Servern 2, 4 verbindet, wobei dem zweiten Server 4 eine Subskriptionsdatenbank 6 zugeordnet ist, in welcher eine den zweiten Endgeräten 3a, 3b, 3c, 3d jeweils zugeordnete Rufnummer und eine der Rufnummer zugeordnete oder zuordenbare technische Eigenschaft, insbesondere die Art des zweiten Endgerätes 3a, 3b, 3c, 3d gespeichert ist. Bei Bedarf können die auf dem E-Mail-Server 4 gespeicherten E-Mails mittels eines E-Mail-fähigen-Endgerätes, also beispielsweise mittels eines stationären Computers 3d, empfangen werden.

Endgerät 3a ist als zumindest E-Mail-fähiges Telefon, insbesondere ein Mobiltelefon, ausgebildet. Endgerät 3b ist als zumindest SMS-fähiges Telefon, insbesondere Festnetz oder Mobiltelefon, und Endgerät 3c als zumindest audiofähiges Telefon, insbesondere Festnetztelefon, ausgebildet. Dabei ist anzumerken, dass ein E-Mail-fähiges Telefon auch dann als E-Mail-fähig im Sinne der Erfindung betrachtet wird, wenn es zusätzlich SMS- und/ oder audiofähig ist und ein SMS-fähiges Telefon auch dann als SMS-fähig betrachtet wird, wenn es zusätzlich audiofähig ist. Insoweit ist bevorzugt die hochwertigste Funktionalität des Endgerätes für dessen Zuordnung zu den Gerätearten E-Mail-fähiges, SMS-fähiges und audiofähiges Endgerät maßgeblich. Darüber hinaus kann, falls das empfangende Endgerät IM-fähig ist, die spezifische Nachricht als Sofortnachricht zugestellt werden.

Das Telekommunikationsnetz kann in Teilen 5a, zumindest zwischen Ursprungs- und Zielserver durch das Internet ausgebildet sein, wohingegen das Telekommunikationsnetz in anderen Teilen 5b, zumindest als Verbindung zwischen den Endgeräten 1, 3a, 3b, 3c, 3d und den Servern 2, 4 als leitungsgebundenes Telefon- oder Hochgeschwindigkeitsdatennetz oder Mobilfunknetz ausgebildet sein kann.

Erfindungsgemäß sind in der Figur die folgenden Verfahrensschritte dargestellt:
A: Versenden der "Rufnummern E-Mail" an den Ursprungsmailserver
B: Routing der E-Mail zum Ziel-E-Mail-Server
C: Datenbankabfrage der Fähigkeiten des Zielendgerätes
D: Zustellung der E-Mail oder der E-Mail zuordenbaren spezifischen Nachricht entsprechend der technischen Merkmale des Zielendgerätes
E: Abrufen der E-Mail via Internet

In der Figur ist der Übertragungsweg einer E-Mail mit dick hervorgehobenen Pfeilen dargestellt. Der Übertragungsweg der spezifischen Empfängernachricht ist mit dünnen Pfeilen dargestellt, wobei zu beachten ist, dass im Falle des E-Mail-fähigen Empfängerendgerätes 3c die spezifische Empfängernachricht die E-Mail selbst ist. Ferner ist in der Figur der Übertragungsweg der Steuerungsinformationen bei der Datenbankabfrage C mit einer Strichpunktlinie gekennzeichnet.

Der Empfänger kann die Rufnummern-E-Mail entsprechend der technischen Möglichkeiten seines Empfangsgerätes entweder direkt oder über eine URL öffnen oder sich an jede beliebige konventionelle E-Mail-Adresse gemäß dem RFC2822 Standard weiterleiten lassen.

Als Vorteil ergibt sich somit ein Mail-Service, der sowohl für Festnetz- als auch für Mobilfunkteilnehmer verwendbar ist, der die Verbreitung und Akzeptanz der E-Mail mit den zusätzlichen Möglichkeiten des MMS-Dienstes verbindet, insbesondere hinsichtlich der Verwendung der E.164-Rufnummern zur Adressierung.
Bei der vorliegenden Erfindung wird zudem keine zentrale Instanz vom Endgerät des Senders abgefragt, um Adressinformationen zu erhalten, wie dieses bei ENUM-basierten Diensten der Fall Ist, so dass das beschriebene Verfahren als nutzungseffizient, bedingt durch ein entsprechend geringes Signalisierungsaufkommen, angesehen werden kann.

Bestehende ENUM-basierte Dienste sind dadurch charakterisiert, dass die vollständigen Adressinformationen (Rufnummer, E-Mail-Adresse, SIP-Adresse etc.) des Kommunikationspartners dem abfragenden Nutzer im Klartext zur Verfügung gestellt werden. Insoweit ist es ein Vorteil der vorliegenden Erfindung, dass prinzipiell keine Abfrage von Adressinformationen notwendig ist und somit keine sensitiven Nutzerinformationen im Klartext übertragen werden müssen. Folglich ist das beschriebene Verfahren im Gegensatz zu existenten, ENUM-basierten Lösungen im Hinblick auf die Wahrung der Vertraulichkeit personenbezogener Daten als unbedenklich zu bewerten.

Die Realisierung des erfindungsgemäßen Verfahrens kann in unterschiedlichen Ausprägungen erfolgen. Um den unterschiedlichen Anforderungen eines Absenders einerseits und eines Empfängers andererseits gerecht zu werden, werden im Folgenden zwei unterschiedliche Szenarien beispielhaft betrachtet.

In einem ersten Fall wünscht der Absender den Versand einer an eine Rufnummer des Empfängers adressierte E-Mail:
Der Absender, der ein stationäres oder mobiles Endgerät, d.h. beispielsweise einen PC oder ein Mobiltelefon nutzt, möchte an einen Empfänger, dessen Rufnummer er kennt, eine E-Mail versenden. Hierzu ist die Rufnummer um eine E-Mail-Kennung, d.h. um eine Domainergänzung zu einer vollständigen E-Mail-Adresse zu ergänzen, wobei die Domainergänzung vorab festgelegt werden kann. Die Ergänzung kann manuell oder automatisiert geschehen. Das genaue Format der E-Mail-Adresse ist in RFC2822 definiert.

Als resultierende Zieladresse ergibt sich generell E.164@domain.extension. Die E.164-Rufnummer sei beispielsweise 022893612345. Je nach Ausgestaltung kann die Zieladresse die Rufnummer im nationalen Format, d.h. 022893612345@domain.extension, oder im internationalen Format, d.h. 4922893612345@domain.extension bzw. +4922893612345@domain.extension, enthalten.

Damit der Absender der E-Mail keine Kenntnis des Netzbetreibers des für den Empfang der E-Mail vorgesehenen Endgerätes haben muss, ist vorzugsweise eine neutrale Kennung, z.B. 491711234567@xyz.com oder für eine nationale, anbieterspezifische Lösung hier in Deutschland eine einem Unternehmen zugeordnete Domain mit einer "de"-Kennung als Top Level Domain z.B. 01711234567@telekom.de zu wählen. Wenn die Zielgruppe für den Empfang der Rufnummem-E-Mails nur Mobilfunkkunden betrifft, kann auch eine Kennung vorgesehen werden, die speziell diese Zielgruppe spezifiziert, z.B. 491711234567@mobi.mobi. Eine neutrale Kennung ist bevorzugt zu wählen, damit standardisierte, internationale bzw. nationale, netz- bzw. anbieterübergreifende Lösungen möglich sind. Sie hätten zudem den Vorteil, dass der Absender keinesfalls den Netzbetreiber des Empfängers kennen muss, wenn er ihm eine E-Mail schicken möchte.

Die Zieladresse der an eine Rufnummer adressierten E-Mail wird wie vorstehend beschrieben, modifiziert bzw. ergänzt. Die resultierende E-Mail mit der modifizierten Zieladresse wird mittels eines üblichen E-Mail-Clients auf dem stationären bzw. dem mobilen Endgerät des Absenders versandt und über den Ursprungs-E-Mail-Server dem betreffenden Ziel-E-Mail-Server zugestellt Der adressierte E-Mail-Server erkennt an der Struktur der Zieladresse, dass es sich um eine Rufnummern-E-Mail handelt. Der Betreiber des Ziel-E-Mail-Servers zu obiger Kennung kann diejenigen Rufnummern bzw. -kreise, die für den E-Mail-Empfang akzeptiert werden, für den Dienst freigeben bzw. freischalten.

Wie die Zustellung erfolgt, ist abhängig von den technischen Möglichkeiten des Endgerätes, das der Empfänger nutzt, sowie von der Tatsache, ob und bejahendenfalls mit welchen Informationen sich der Empfänger beim Betreiber des Systems für diesen Dienst angemeldet hat

Im Einzelnen gestaltet sich der Ablauf zur Zustellung bzw. Empfang der Rufnummern-E-Mail wie folgt:
Wenn der Empfänger ein Endgerät mit E-Mail-Client hat, d.h. einen Computer oder ein Mobiltelefon mit einer E-Mail Software, so muss er das Endgerät entsprechend konfigurieren, beispielsweise durch Angabe der Adresse des POP3-Servers, den der Betreiber zum Empfang der E-Mails bereitstellt. Nach entsprechender Konfiguration kann der Empfänger die für ihn bestimmten Rufnummem-E-Mails mittels Pushservice oder Pullservice - vergleichbar den bekannten Empfangsoptionen klassischer" E-Mails - abrufen. Im Falle einer pushorientierten Zustellung wird die E-Mail dem zum Empfang der E-Mail eingerichteten Endgerät automatisiert ohne weitere Aktivität des Empfängers übermittelt. Bei der pullorientierten Zustellung wird die E-Mail dagegen auf dem Ziel-E-Mail-Server hinterlegt, von welchem der Empfänger diese dann manuell mit seinem E-Mail-Client abrufen kann. Eine Subskription des Teilnehmers muss technisch gesehen in diesem Fall nicht erfolgen. Vielmehr kann aus der Tatsache, dass in der Subskriptionsdatenbank keine Informationen über die Fähigkeit des der Rufnummer zugeordneten Endgerätes enthalten sind, geschlossen werden, dass Empfänger ohne Subskription die für sie bestimmten Rufnummem-E-Mails auf konventionelle Weise selbst per Endgerät mit E-Mail-Client abrufen.

Demgegenüber kann die Subskriptionsdatenbank jedoch die Information enthalten, dass das der Rufnummer zugeordnete Endgerät E-Mail-fähig ist, so dass in diesem Fall die E-Mail als Nachricht dem Endgerät übermittelt wird. Zusätzlich kann hinterlegt werden, ob die E-Mail zum Endgerät des Empfängers pushorientiert zu übertragen ist.

Wenn der Empfänger ein SMS-fähiges Endgerät hat, so muss er sich vorab beim Betreiber des Systems subskribieren mit dem Hinweis, dass er über ein SMS-fähiges Endgerät verfügt. In Abhängigkeit von der jeweiligen Ausgestaltung kann dieser Hinweis systemseitig abgeleitet werden aus einer SMS, die der Empfänger an den Betreiber zum Zwecke der Subskription vorab geschickt hat. Die relevanten Subskriptionsdaten werden vom Betreiber des Systems in der zugehörigen Subskriptionsdatenbank gespeichert. Wenn eine Rufnummern-E-Mail für einen auf diese Weise subskribierten Empfänger vorliegt, erhält der Empfänger eine Benachrichtigung durch den o.a. E-Mail-Server mittels einer SMS an die Rufnummer aus der Zieladresse der Rufnummem-E-Mail. In der SMS ist eine URL zum Abruf enthalten. In Abhängigkeit von der jeweiligen Ausgestaltung enthält die SMS zusätzlich einen Hinweis auf den Titel der E-Mail. In einer weiteren Ausgestaltung enthält die SMS nur einen allgemeinen Hinweis auf eine neue E-Mail z.B. in der Form "Für Sie ist eine E-Mail eingetroffen.". In Abhängigkeit von der jeweiligen Ausgestaltung enthält auch hier die SMS zusätzlich einen Hinweis auf den Titel der E-Mail. Der Abruf erfolgt hier nachfolgend über eine dem Empfänger vorab bekannte URL bzw. mittels Weiterleitung auf eine vorab vom Empfänger im System hinterlegte "klassische" E-Mail-Adresse.

Wenn der Empfänger ein einfaches, lediglich audiofähiges Endgerät hat, was der im Festnetz üblichen Konstellation entspricht, muss der Empfänger sich vorab beim Betreiber des Systems subskribieren mit dem Hinweis, dass er über ein audiofähiges Endgerät verfügt. In Abhängigkeit von der jeweiligen Ausgestaltung kann dieser Hinweis systemseitig abgeleitet werden aus einem Anruf des Empfängers an den Betreiber, den der Empfänger zum Zwecke der Subskription tätigt. Die relevanten Subskriptionsdaten werden vom Betreiber des Systems in einer zugehörigen Datenbank gespeichert. Wenn eine Rufnummern-E-Mail für einen auf diese Weise subskribierten Empfänger vorliegt, erhält der Empfänger eine Benachrichtigung durch den o.a. E-Mail-Server mittels einer Audionachricht, z.B. in der Gestalt "Für Sie ist eine E-Mail eingetroffen", über einen Anruf an die Rufnummer aus der Zieladresse der E-Mail. Diese Audionachricht kann in Abhängigkeit von der jeweiligen Ausgestaltung um einen Hinweis auf den Titel der E-Mail ergänzt werden. Der Abruf erfolgt später über eine dem Empfänger vorab bekannte URL bzw. mittels Weiterleitung auf eine vorab vom Empfänger im System hinterlegte "klassische" E-Mail-Adresse.

Der Absender erhält eine Information - bevorzugt als E-Mail - wenn die E-Mail an die Rufnummer nicht zustellbar ist, beispielsweise weil die Rufnummer ungültig oder nicht für den Dienst freigegeben ist, wenn die Lösung netzbetreiberspezifisch sein sollte.

Auch der Absender kann im System eine "klassische" E-Mail-Adresse hinterlegen, zu der dann eine Kopie seiner von ihm versandten E-Mails geschickt wird, damit er später, z.B. von seinem stationären Endgerät aus, seine E-Mail-Kommunikation nachverfolgen kann. Dies bietet sich insbesondere an, wenn der Absender mit einem mobilen Endgerät arbeitet.

In einem zweiten Fall wünscht der Empfänger den Empfang einer an seine "klassische" E-Mail-Adresse adressierte E-Mail mittels seiner Rufnummer

Ein Absender versendet eine klassische E-Mail gemäß den Adressierungsregeln aus RFC2822 an eine klassische E-Mail-Adresse des Empfängers, die ebenfalls konform zu RFC2822 ist Die E-Mail wird anschließend netz-/systemseitig vom zur klassischen E-Mail-Adresse des Empfängers gehörigen E-Mail-Server an eine Rufnummer, wie oben im 1. Fall beschrieben, weitergeleitet, wenn der Empfänger dies so wünscht. Die entsprechende Rufnummer hat der Empfänger vorab im System, d.h. im zu seiner klassischen E-Mail-Adresse gehörigen E-Mail-Server, hinterlegt. Die weitere Behandlung der weitergeleiteten E-Mail erfolgt gemäß der im ersten Fall beschriebene Methoden.

Nachfolgend wird die erfindungsgemäße Versendung einer Instant Message erläutert:
Das erfindungsgemäße Verfahren kann besonders vorteilhaft zur Versendung von Informationen, insbesondere Nachrichten mit Dateianhängen, die für einen Empfängers bestimmt sind, welcher einen Instant Messaging Dienst nutzt, verwendet werden. Die Ziel-Instant Messaging-Adresse kann aus einer beliebigen Rufnummer durch Hinzufügen des Domainnamens und einer entsprechenden Extension gebildet werden. Die Instant Message wird an den zugehörigen Instant Messaging Server verschickt, der nach der Hinterlegung der Nachricht auf eine Datenbank zugreift, aus deren Daten zumindest eine der Rufnummer zuordenbare Information über die technischen Leistungsmerkmale des Empfängerendgeräts ermittelt wird, wobei in Abhängigkeit der Information eine spezifische Empfängernachricht an das Endgerät des Empfängers übermittelt wird. D.h., dass nach dem Empfang einer Rufnummem-Instant Message auf einem Instant Messaging Server die in einer Datenbank vorgehaltenen Informationen ermittelt werden, die der Rufnummer des Empfängers zugeordnet werden können und aus denen sich der weitere Verfahrensablauf bestimmt, wobei Form und Inhalt der spezifischen Empfängemachricht, die vom Server zum Endgerät des Empfängers übermittelt wird, abhängig von der entsprechend ermittelten Information sind.

Hierbei wird beispielhaft im Falle von SIP (Session Initiation Protokoll) die Zieladresse aus der Rufnummer und dem zugehörigen SIP- Hostnamen gebildet, so dass sich die Instant Messaging Adresse wie folgt zusammensetzt
sip:+491711234567@hostname.extension

Die Domainergänzung, um die die Rufnummer zur Zieladresse vervollständigt wird, besteht in diesem Fall aus zwei Teilkennungen, wobei die erste Teilkennung aus dem Internet-Protokoll "sip:" besteht, das der Rufnummer vorgesetzt ist, und die zweite Teilkennung aus einem @-Zeichen, der Second-Level-Domain "hostname" und der Top-Level-Domain "extension" besteht, die der Rufnummer nachgeordnet sind.

Beispielhaft sei die E164-Rufnummer +491711234567. Die Instant Messaging Adresse würde sich dann bei einem Hostnamen n@telekom" und einer Extension ".de" zur Zieladresse "sip:+491711234567@telekom.de" zusammensetzen.

Mit Hilfe der so gewonnenen Zieladresse wird die Domain des Zielservers adressiert und die zugehörige Nachricht an den Zielserver versendet Ist der Instant Messaging Server mit einer Datenbank wie in dem Beispiel bezüglich der Versendung einer E-Mail beschrieben, verbunden, kann, abhängig von den Subskriptionsdaten, welche in der Datenbank für den adressierten Teilnehmer hinterlegt sind, die Nachricht zugestellt werden. Form und Inhalt der spezifischen Empfängemachricht, die vom Instant-Messaging Server zum Endgerät des Empfängers übermittelt wird, sind dabei abhängig von der entsprechend ermittelten Information über das Empfängerendgerät Die Datenbank kann sowohl lokal, d.h. Domainserver-spezfisch, oder zentralisiert d.h. unterschiedliche Domainserver greifen auf die Datenbank zu, ausgestaltet werden.

Nachfolgend wird die erfindungsgemäße Versendung einer Upload-Nachricht erläutert:
Das erfindungsgemäße Verfahren kann besonders vorteilhaft zur Versendung von Informationen, insbesondere Nachrichten mit Dateianhängen, die für eine Domain, zu deren Server Zugriffsmöglichkeiten des Empfängers bestehen, bestimmt sind, an eine beliebige Rufnummer verwendet werden. Die Zieladresse ist in diesem Fall eine Domainadresse, bestehend aus der Rufnummer des Empfängers und einer Domainergänzung. Die Nachricht wird zu einem zugehörigen Server per Upload übertragen, wobei der Server nach der Hinterlegung der Nachricht auf eine Datenbank zugreift und aus deren Daten zumindest eine der Rufnummer zuordenbare Information über die technischen Leistungsmerkmale des Empfängerendgerätes ermittelt, wobei in Abhängigkeit der Information eine spezifische Empfängernachricht an das Endgerät übermittelt wird. D.h., dass nach dem Empfang einer mit einer Rufnummer-Domain-Adresse versehenen Nachricht auf dem der Domain zugehörigen Server die in einer Datenbank vorgehaltenen Informationen ermittelt werden, die der Rufnummer des Empfängers zugeordnet werden können und aus denen sich der weitere Verfahrensablauf bestimmt, wobei Form und Inhalt der spezifischen Empfängernachricht, die vom Server zum Endgerät des Empfängers übermittelt wird, abhängig von der entsprechend ermittelten Information sind.

Der Absender, der ein intemetfähiges stationäres oder mobiles Endgerät, d.h. beispielsweise einen Computer oder ein Mobiltelefon nutzt, möchte an einen Empfängerendgerät 3a, 3b, 3c, dessen Rufnummer er kennt, eine Nachricht per Upload versenden. Nach dem erfindungsgemäßen Verfahren wird hierzu die Rufnummer um eine Domainergänzung zu einer vollständigen URL (Uniform Resource Locator) ergänzt. Die Ergänzung kann manuell oder automatisiert geschehen. Die Domainergänzung besteht hierbei aus zwei Teilkennungen. Eine erste Teilkennung ist "http://www.", wobei "http" eine Protokollangabe bezeichnend das Hypertext Transfer Protokoll ist und "www" einen Server im World Wide Web kennzeichnet. Die erste Teilkennung ist der Rufnummer vorgesetzt. Eine zweite Teilkennung ist der Rufnummer nachgesetzt und wird von einer Top-Level Domain oder eine Subdomain und einer Top-Level-Domain gebildet

Als resultierende Zieladresse ergibt sich generell "http://www.Rufnummer.top-level-domain" oder http:/hvww.Rufnummer.domain.top-level-domain, wobei die Rufnummer im E.164-Format gebildet ist. Die Rufnummer sei beispielsweise 022893612345. Je nach Ausgestaltung kann die Zieladresse die Rufnummer im nationalen Format d.h. http://www.022893612345.de oder im internationalen Format, d.h. http://www.004922893612345.com enthalten. An dieser Stelle sei angemerkt, dass die Protokollangabe "http" und die Top-Level-Domains "de" und "com" hier nur beispielhaft dargestellt sind. Ebenso möglich ist die Hervorhebung etwa des Netzbetreibers oder Diensteanbieters, z.B. http:// www.022893612345.telekom.de.

Die Nachricht wird auf dem zugehörigen Server hinterlegt. Der Abruf der Nachricht erfolgt über einen Zugriff des Empfängers auf den zugehörigen Server, der durch die URL adressiert ist Der Zugriff ist in der Regel geschützt, beispielsweise durch ein Passwort, das der Empfänger zur Authentisierung eingeben muss.

Ist der Server mit einer Datenbank, wie vorgenannt beschrieben, verbunden, kann abhängig von den Subskriptionsdaten, welche in der Datenbank für den adressierten Teilnehmer hinterlegt sind, die Nachricht zugestellt werden, wobei Form und Inhalt der spezifischen Empfängemachricht, die vom Server zum Endgerät des Empfängers übermittelt wird, abhängig von der entsprechend ermittelten Information sind. Die Datenbank kann sowohl lokal, d.h. Domainserver-spezifisch, oder zentralisiert, d.h. unterschiedliche Domainserver greifen auf die Datenbank zu, ausgestaltet werden. Die weitere Ausgestaltung der Datenbank entspricht derjenigen, wie sie in Bezug auf die Versendung einer E-Mail an eine beliebige Rufnummer beschrieben ist.

Der Empfänger kann über das Vorliegen einer neuen Nachricht informiert werden. Hierzu erhält er z.B. eine spezifische Audionachricht oder SMS oder E-Mail, je nach Fähigkeiten seines Endgerätes und des zugehörigen Eintrages in der Datenbank. In dieser spezifischen Empfängernachricht erhält der Empfänger Informationen darüber, dass eine neue Upload-Nachricht für ihn vorliegt, optional kann auch die URL angegeben werden.

## Patentansprüche

1. Verfahren zur Versendung einer Nachricht auf Basis eines Internet-Protokolls an eine beliebige Rufnummer eines Empfängers, bei dem die Empfängeradresse aus der Rufnummer des Empfängers und einer Domainergänzung gebildet und die Nachricht auf einem Nachrichten-Server (4) hinterlegt wird, insbesondere zur weiteren Auswertung und/oder Bereitstellung für den Empfänger, wobei nach der Hinterlegung der Nachricht der Nachrichten-Server (4) auf eine Datenbank (6) zugreift und aus deren Daten zumindest eine der Rufnummer zuordenbare Information über eine technische Eigenschaft eines Empfängerendgerätes (3a, 3b, 3c, 3d) des Empfängers ermittelt, dem die Rufnummer zugeordnet ist, wobei in Abhängigkeit der Information eine spezifische Empfängernachricht an das Empfängerendgerät (3a, 3b, 3c, 3d) übermittelt wird, **dadurch gekennzeichnet, dass** als technische Eigenschaft in der Datenbank zumindest zwischen einem audiofähigen, einem SMS-fähigen und einem E-Mail fähigen Empfängerendgerät (3a, 3b, 3c, 3d) unterschieden wird, wobei im Fall eines audiofähigen Endgeräts (3a, 3b, 3c) die Empfängernachricht ein Anruf des Endgerätes (3a, 3b, 3c) ist, und im Fall eines SMS-fähigen Endgeräts (3a, 3b) die Empfängernachricht eine SMS ist, wobei in beiden Fällen mit der Empfängernachricht über den Eingang der Nachricht und deren Abrufbarkeit über eine Internetadresse informiert wird, und dass im Fall eines E-Mail fähigen Endgeräts (3a), wenn die Nachricht eine Email ist, die Empfängernachricht die E-Mail selbst ist.

2. Verfahren nach Anspruch 1, **dadurch gekennzeichnet, dass** die Nachricht eine E-Mail und der Nachrichten-Server (4) ein E-Mail-Server ist.

3. Verfahren nach Anspruch 1, **dadurch gekennzeichnet, dass** die Nachricht eine Sofortnachricht und der Nachrichten-Server (4) ein Nachrichtensofortversand-Server ist.

4. Verfahren nach Anspruch 1, **dadurch gekennzeichnet, dass** die Nachricht eine für das Hochladen zu einer spezifischen Domain geeignete Nachricht und der Nachrichten-Server (4) ein Domain-Server ist.

5. Verfahren nach einem der vorherigen Ansprüche, **dadurch gekennzeichnet, dass** der Rufnummer als Domainergänzung eine von einem Land oder eine vom Netzanbieter des Empfängers unabhängige Kennung nachgeordnet wird.

6. Verfahren nach Anspruch 5, **dadurch gekennzeichnet, dass** die Kennung aus einem @-Zeichen gebildet wird, welchem eine neutrale Domain folgt, der ein Punkt und eine neutrale Erweiterung nachgeordnet ist.

7. Verfahren nach einem der vorherigen Ansprüche 1, 3 oder 4, **dadurch gekennzeichnet, dass** die Domainergänzung aus einer ersten Teilkennung, die der Rufnummer vorgesetzt ist, und einer zweiten Teilkennung gebildet ist, die der Rufnummer nachgesetzt ist.

8. Verfahren nach Anspruch 7, **dadurch gekennzeichnet, dass** die erste Teilkennung "http://www." und die zweite Teilkennung eine Erweiterung, die auf eine Top-Level Domain oder auf eine Sub-Domain einer Top-Level-Domain verweist, ist, der ein Punkt vorgesetzt ist.

9. Verfahren nach Anspruch 7, **dadurch gekennzeichnet, dass** die erste Teilkennung "sip:" ist und die zweite Tellkennung aus einem @-Zeichen gebildet wird, welchem ein Hostname in Gestalt einer Second-Level-Domain folgt, der ein Punkt und eine Erweiterung in Gestalt einer Top-Level-Domain nachgeordnet ist.

10. Verfahren nach einem der vorherigen Ansprüche, **dadurch gekennzeichnet, dass** die Rufnummer beim Versenden der Nachricht von einem Endgerät (1) des Absenders oder einem diesem zugeordneten Server (2) automatisiert um die Domainergänzung ergänzt wird.

11. Verfahren nach einem der vorherigen Ansprüche 1, 3, 7, 9 oder 10, **dadurch gekennzeichnet, dass** in dem Fall, dass der Rufnummer ein Sofortnachrichten-fähiges Endgerät zuordenbar ist und die Nachricht eine Sofortnachricht ist, die Empfängernachricht die Sofortnachricht selbst ist.

12. Verfahren nach einem der vorherigen Ansprüche 1, 2, 5 bis 6 oder 10, **dadurch gekennzeichnet, dass** in dem Fall, dass der Rufnummer eine weitere E-Mail-Adresse zuordenbar ist, die Empfängernachricht die E-Mail selbst ist und die E-Mail an diese weitere E-Mail-Adresse weitergeleitet wird.

13. Verfahren nach einem der vorherigen Ansprüche, **dadurch gekennzeichnet, dass** mit der Empfängernachricht der Betreff der Nachricht mitgeteilt wird, wobei im Falle eines Anrufs der Betreff in eine Sprachnachricht umgewandelt und vorgesprochen wird.

14. Verfahren nach einem der vorherigen Ansprüche, **dadurch gekennzeichnet, dass** mit der Empfängernachricht als Anruf oder SMS die Internetadresse mitgeteilt wird, unter welcher die Empfängernachricht abrufbar ist.

15. Verfahren nach einem der vorherigen Ansprüche, **dadurch gekennzeichnet, dass** mit der Empfängernachricht ein Kennwort mitgeteilt wird, welches unter der Internetadresse Zugang zu der Nachricht gewährt.

16. Verfahren nach einem der vorherigen Ansprüche, **dadurch gekennzeichnet, dass** die Empfängernachricht zwischengespeichert wird, wenn sie dem Empfängerendgerät nicht übermittelt werden kann.

17. Verfahren nach einem der vorherigen Ansprüche, **dadurch gekennzeichnet, dass** vor der Übermittlung der Empfängernachricht überprüft wird, ob die Rufnummer des Empfängers für den Empfängernachricht -Empfang freigegeben oder gesperrt ist.

18. Verfahren nach einem der vorherigen Ansprüche, **dadurch gekennzeichnet, dass** dem Absender eine Nachricht übermittelt wird, mittels derer der Absender informiert wird, wenn die Empfängernachricht an die Rufnummer nicht zustellbar ist oder wenn die Empfängernachricht an die Rufnummer zugestellt wurde.

19. System zur Versendung einer Nachricht auf Basis eines Internet-Protokolls an eine beliebige Rufnummer eines Empfängers, bei dem die Empfängeradresse aus der Rufnummer des Empfängers und einer Domainergänzung bildbar und die Nachricht auf einem Nachrichten-Server (4) hinterlegbar ist, mit zumindest einem ersten Endgerät (1a, 1b) zur Telekommunikation, welches zur Erstellung, Versand und Bereitstellung der Nachricht auf Basis des Internet-Protokolls eingerichtet ist, einem ersten Nachrichten-Server (2), der dem ersten Endgerät (1a, 1b) zugeordnet ist, zumindest einem zweiten Endgerät (3a, 3b, 3c, 3d) zur Telekommunikation, einem zweiten Nachrichten-Server (4), der dem zweiten Endgerät (3a, 3b, 3c, 3d) zugeordnet ist, und einem Telekommunikationsnetz (5a, 5b), von welchem zumindest ein erster Teil (5a) die Server (2, 4) miteinander und ein zweiter Teil (5b) die Endgeräte (1 a, 1 b, 3a, 3b, 3c, 3d) mit den ihnen zugeordneten Nachrichten-Servern (2, 4) verbindet, wobei dem zweiten Nachrichten-Server (4) eine Datenbank (6) zugeordnet ist, in welcher eine dem zweiten Endgerät (3a, 3b, 3c, 3d) zugeordnete Rufnummer gespeichert und zumindest eine der Rufnummer zuordenbare Information über eine technische Eigenschaft des zweiten Endgeräts (3a, 3b, 3c, 3d) enthalten ist, und in Abhängigkeit der Information eine spezifische Empfängernachricht an das Empfängerendgerät (3a, 3b, 3c, 3d) übermittelbar ist, **dadurch gekennzeichnet, dass** als technische Eigenschaft in der Datenbank zumindest zwischen einem audiofähigen, einem SMS-fähigen und einem E-Mail fähigen Empfängerendgerät (3a, 3b, 3c, 3d) unterscheidbar ist, und dass das System dazu eingerichtet ist, im Fall eines audiofähigen Endgeräts (3a, 3b, 3c) als Empfängernachricht einen Anruf des Endgerätes (3a, 3b, 3c) vorzunehmen, und im Fall eines SMS-fähigen Endgeräts (3a, 3b) als Empfängernachricht eine SMS zu senden, wobei in beiden Fällen mit der Empfängernachricht über den Eingang der Nachricht und deren Abrufbarkeit über eine Internetadresse informiert wird, und im Falle eines E-Mail fähigen Endgeräts (3a), wenn die Nachricht eine Email ist, als Empfängernachricht die E-Mail selbst zu verwenden.

20. System nach Anspruch 19, **dadurch gekennzeichnet, dass** es Speichermittel zur Zwischenspeicherung der spezifischen Nachricht aufweist.

21. System nach einem der Ansprüche 19 bis 20, **dadurch gekennzeichnet, dass** der erste Teil des Kommunikationsnetzes (5a) durch das Internet und der zweite Teil des Kommunikationsnetzes (5b) durch ein leitungsgebundenes Fernsprechnetz oder ein Mobilfunknetz gebildet ist.

## Claims

1. Method for sending a message on the basis of an Internet protocol to any desired call number of a recipient, in which the recipient address is composed of the call number of the recipient and a domain extension, and the message is stored on a message server (4), in particular for further evaluation and/or provision to the recipient, wherein, after the message is stored, the message server (4) accesses a database (6) and determines from the data therein at least one information item that can be associated with the call number concerning a technical feature of a recipient terminal (3a, 3b, 3c, 3d) of the recipient with which the call number is associated, wherein a specific recipient message is transmitted to the recipient terminal (3a, 3b, 3c, 3d) as a function of the information, **characterized in that**, as a technical feature, a distinction is made in the database at least between an audio-capable, an SMS-capable, and an e-mail-capable recipient terminal (3a, 3b, 3c, 3d), wherein in the case of an audio-capable recipient terminal (3a, 3b, 3c, 3d) the recipient message is a phone call to the terminal (3a, 3b, 3c), and in the case of an SMS-capable terminal (3a, 3b) the recipient message is an SMS, wherein in both cases notification is provided with the recipient message of the arrival of the message and its retrievability via an Internet address, and **in that** in the case of an e-mail-capable terminal (3a), the recipient message is the e-mail itself when the message is an e-mail.

2. Method according to claim 1, **characterized in that** the message is an e-mail and the message server (4) is an e-mail server.

3. Method according to claim 1, **characterized in that** the message is an instant message and the message server (4) is an instant messaging server.

4. Method according to claim 1, **characterized in that** the message is a message that is suited for uploading to a specific domain and the message server (4) is a domain server.

5. Method according to any one of the preceding claims, **characterized in that** the call number as a domain extension is followed by an identifier that is independent of a country or a network provider of the recipient.

6. Method according to claim 5, **characterized in that** the identifier is composed of an "@" character followed by a neutral domain, followed by a period and a neutral extension.

7. Method according to any one of the preceding claims 1, 3, or 4, **characterized in that** the domain extension is composed of a first partial identifier that precedes the call number and a second partial identifier that follows the call number.

8. Method according to claim 7, **characterized in that** the first partial identifier is "http://www." and the second partial identifier is an extension that refers to a top-level domain or to a subdomain of a top-level domain, preceded by a period.

9. Method according to claim 7, **characterized in that** the first partial identifier is "sip:" and the second partial identifier is composed of an "@" character followed by a host name in the form of a second-level domain, followed by a period and an extension in the form of a top-level domain.

10. Method according to any one of the preceding claims, **characterized in that**, when the message is sent, the call number is automatically supplemented with the domain extension by a terminal (1) of the sender or a server (2) associated therewith.

11. Method according to any one of the preceding claims 1, 3, 7, 9, or 10, **characterized in that**, in the event that a terminal capable of instant messaging can be associated with the call number, and the message is an instant message, the recipient message is the instant message itself.

12. Method according to any one of the preceding claims 1, 2, 5 through 6, or 10, **characterized in that**, in the event that an additional e-mail address can be associated with the call number, the recipient message is the e-mail itself and the e-mail is forwarded to this additional e-mail address.

13. Method according to any one of the preceding claims, **characterized in that** the subject of the message is communicated with the recipient message, wherein, in the case of a phone call, the subject is converted into a voice message and spoken aloud.

14. Method according to any one of the preceding claims, **characterized in that** the Internet address at which the recipient message may be retrieved is communicated with the recipient message as a phone call or SMS.

15. Method according to any one of the preceding claims, **characterized in that** a password is communicated with the recipient message that grants access to the message at the Internet address.

16. Method according to any one of the preceding claims, **characterized in that** the recipient message is temporarily stored if it cannot be transmitted to the recipient terminal.

17. Method according to any one of the preceding claims, **characterized in that** a check is made prior to the transmission of the recipient message as to whether the call number of the recipient is enabled or blocked for receipt of the recipient message.

18. Method according to any one of the preceding claims, **characterized in that** a message is transmitted to the sender that notifies the sender if the recipient message cannot be delivered to the call number or if the recipient message has been delivered to the call number.

19. System for sending a message on the basis of an Internet protocol to any desired call number of a recipient, in which the recipient address can be formed from the call number of the recipient and a domain extension, and the message can be stored on a message server (4), having at least one first terminal (1a, 1 b) for telecommunication that is configured for creating, sending, and providing the message on the basis of the Internet protocol, having a first message server (2) which is associated with the first terminal (1a, 1 b), having at least one second terminal (3a, 3b, 3c, 3d) for telecommunication, having a second message server (4) which is associated with the second terminal (3a, 3b, 3c, 3d), and having a telecommunications network (5a, 5b) of which at least a first part (5a) connects the servers (2, 4) with one another and a second part (5b) connects the terminals (1 a. 1b, 3a, 3b, 3c, 3d) with the message servers (2, 4) associated with them, wherein a database (6), in which a call number associated with the second terminal (3a, 3b, 3c, 3d) is stored and that contains at least one information item that can be associated with the call number concerning a technical feature of the second terminal (3a, 3b, 3c, 3d), is associated with the second message server (4), and a specific recipient message can be transmitted to the recipient terminal (3a, 3b, 3c, 3d) as a function of the information, **characterized in that**, as a technical feature, a distinction can be made in the database at least between an audio-capable, an SMS-capable, and an e-mail-capable recipient terminal (3a, 3b, 3c, 3d), and **in that** the system is configured to make a phone call to the terminal (3a, 3b, 3c) as the recipient message in the case of an audio-capable recipient terminal (3a, 3b, 3c), and to send an SMS as the recipient message in the case of an SMS-capable terminal (3a, 3b), wherein in both cases notification is provided with the recipient message of the arrival of the message and its retrievability via an Internet address, and in the case of an e-mail-capable terminal (3a) the system is configured to use the e-mail itself as the recipient message when the message is an e-mail.

20. System according to claim 19, **characterized in that** it has storage means for temporarily storing the specific message.

21. System according to any one of claims 19 through 20, **characterized in that** the first part of the communications network (5a) is composed of the Internet, and the second part of the communications network (5b) is composed of a wired telephone network or a mobile telephone network.

## Revendications

1. Procédé d'envoi d'un message sur la base d'un protocole internet à un numéro d'abonné quelconque d'un destinataire dans lequel l'adresse de destinataire est constituée par le numéro d'abonné du destinataire et un complément de nom de domaine et dans lequel le message est stocké dans un serveur de messages (4), notamment en vue de son analyse ultérieure et/ou de sa mise à disposition au destinataire, le serveur de messages (4) accédant, après le stockage du message, à une base de données (6) et déterminant, à partir des données contenues dans celle-ci, au moins une information pouvant être associée au numéro d'abonné, relative à une caractéristique technique d'un terminal de destinataire (3a, 3b, 3c, 3d) du destinataire auquel le numéro d'abonné est attribué, un message de destinataire spécifique étant envoyé au terminal de destinataire (3a, 3b, 3c, 3d) en fonction de l'information, **caractérisé en ce que** la base de données distingue, comme caractéristique technique, au moins entre un terminal de destinataire (3a, 3b, 3c, 3d) disposant des fonctionnalités audio, SMS et courrier électronique, le message de destinataire étant un appel vers le terminal (3a, 3b, 3c) dans le cas d'un terminal disposant de la fonctionnalité audio (3a, 3b, 3c), le message de destinataire étant un SMS dans le cas d'un terminal disposant de la fonctionnalité SMS (3a, 3b), le message de destinataire étant accompagné, dans les deux cas, d'une information relative à la réception du message et à l'accessibilité de ce dernier via une adresse internet, et **en ce que** dans le cas d'un terminal de destinataire (3a) disposant de la fonctionnalité de courrier électronique, si le message est un courrier électronique, le message de destinataire est le courrier électronique lui-même.

2. Procédé selon la revendication 1, **caractérisé en ce que** le message est un courrier électronique et **en ce que** le serveur de messages (4) est un serveur de messagerie électronique.

3. Procédé selon la revendication 1, **caractérisé en ce que** le message est un message instantané et **en ce que** le serveur de messages (4) est un serveur de messagerie instantané.

4. Procédé selon la revendication 1, **caractérisé en ce que** le message est un message apte à être téléchargé vers un domaine spécifique et **en ce que** le serveur de messages (4) est un serveur de domaine.

5. Procédé selon l'une des revendications précédentes, **caractérisé en ce qu'**un identifiant indépendant d'un pays ou du fournisseur d'accès réseau du destinataire est affecté au numéro d'abonné comme complément de nom de domaine.

6. Procédé selon la revendication 5, **caractérisé en ce que** le identifiant est constitué par un caractère @ suivi d'un nom de domaine neutre, lui-même suivi d'un point et d'une extension neutre.

7. Procédé selon l'une des revendications précédentes 1, 3 ou 4, **caractérisé en ce que** le complément de nom de domaine est constitué par un premier identifiant partiel placé devant le numéro d'abonné et un deuxième identifiant partiel placé derrière le numéro d'abonné.

8. Procédé selon la revendication 7, **caractérisé en ce que** le premier identifiant partiel est "http://www." et **en ce que** le deuxième identifiant partiel est une extension renvoyant à un domaine de premier niveau ou à un sous-domaine d'un domaine de premier niveau et précédée d'un point.

9. Procédé selon la revendication 7, **caractérisé en ce que** le premier identifiant partiel est "sip:" et **en ce que** le deuxième identifiant partiel est constitué par un caractère @ suivi d'un nom d'hôte sous la forme d'un domaine de second niveau suivi d'un point et d'une extension sous la forme d'un domaine de premier niveau.

10. Procédé selon l'une des revendications précédentes, **caractérisé en ce que** le complément de nom de domaine est automatiquement ajouté au numéro d'abonné lors de l'envoi du message depuis un terminal (1) de l'expéditeur ou depuis un serveur (2) associé à ce dernier.

11. Procédé selon l'une des revendications précédentes 1, 3, 7, 9 ou 10, **caractérisé en ce que**, dans le cas où un terminal disposant de la fonctionnalité de messagerie instantanée peut être associé au numéro d'abonné et le message est un message instantané, le message de destinataire est le message instantané lui-même.

12. Procédé selon l'une des revendications 1, 2, 5 à 6 ou 10, **caractérisé en ce que**, dans le cas où une autre adresse de courrier électronique peut être associée au numéro d'abonné, le message de destinataire est le courrier électronique lui-même et le courrier électronique est acheminé vers cette autre adresse de courrier électronique.

13. Procédé selon l'une des revendications précédentes, **caractérisé en ce que** l'objet du message est transmis avec le message de destinataire, l'objet étant converti en un message vocal à écouter dans le cas d'un appel.

14. Procédé selon l'une des revendications précédentes, **caractérisé en ce que** l'adresse internet à laquelle le message de destinataire est accessible et transmise avec le message de destinataire sous forme d'appel ou de SMS.

15. Procédé selon l'une des revendications précédentes, **caractérisé en ce qu'**un identifiant est transmis avec le message de destinataire permettant l'accès au message à l'adresse internet.

16. Procédé selon l'une des revendications précédentes, **caractérisé en ce que** le message de destinataire sera stocké dans une mémoire tampon s'il ne peut pas être envoyé au terminal de destinataire.

17. Procédé selon l'une des revendications précédentes, **caractérisé en ce que**, avant de transmettre le message de destinataire, le système vérifie si le numéro d'abonné du destinataire est autorisé ou non à recevoir le message de destinataire.

18. Procédé selon l'une des revendications précédentes, **caractérisé en ce que** l'expéditeur reçoit un message l'informant que le message de destinataire ne peut pas être envoyé au numéro d'abonné ou que le message de destinataire à été envoyé au numéro d'abonné.

19. Procédé d'envoi d'un message sur la base d'un protocole internet à un numéro d'abonné quelconque d'un destinataire dans lequel l'adresse de destinataire peut être constituée par le numéro d'abonné du destinataire et un complément de nom de domaine et dans lequel le message peut être stocké dans un serveur de messages (4), moyennant au moins un premier terminal (1a, 1b) de télécommunication configuré pour créer, envoyer et mettre à disposition le message sur la base du protocole internet, un premier serveur de messages (2) associé au premier terminal (1a, 1b), au moins un deuxième terminal (3a, 3b, 3c, 3d) de télécommunication, un deuxième serveur de messages (4) associé au deuxième terminal (3a, 3b, 3c, 3d) et un réseau de télécommunication (5a, 5b) dont au moins une première partie (5a) relie les serveurs (2, 4) entre eux et dont une deuxième partie (5b) relie les terminaux (1a, 1b, 3a, 3b, 3c, 3d) avec les serveurs (2, 4) qui leur sont associés, une base de données (6) étant associée au deuxième serveur de messages (4) dans laquelle est stocké un numéro d'abonné associé au deuxième terminal (3a, 3b, 3c, 3d) et qui contient au moins une information pouvant être associée au numéro d'abonné, relative à une information technique du deuxième terminal (3a, 3b, 3c, 3d), et un message de destinataire spécifique pouvant être envoyé au terminal de destinataire (3a, 3b, 3c, 3d) en fonction de l'information, **caractérisé en ce que** la base de données distingue, comme information technique, au moins entre un terminal de destinataire disposant des fonctionnalités audio, SMS et courrier électronique (3a, 3b, 3c, 3d), et **en ce que** le système est configuré pour effectuer un appel vers le terminal de destinataire (3a, 3b, 3c) comme message de destinataire dans le cas d'un terminal disposant de la fonctionnalité audio (3a, 3b, 3c), pour envoyer un SMS comme message de destinataire dans le cas d'un terminal disposant de la fonctionnalité SMS (3a, 3b), le message de destinataire étant accompagné, dans les deux cas, d'une information relative à la réception du message et à l'accessibilité de ce dernier via une adresse internet, et dans le cas d'un terminal disposant de la fonctionnalité de courrier électronique (3a), pour utiliser comme message de destinataire le courrier électronique lui-même.

20. Système selon la revendication 19, **caractérisé en ce qu'**il comprend des moyens de stockage pour le stockage du message spécifique dans une mémoire tampon.

21. Système selon l'une des revendications 19 à 20, **caractérisé en ce que** la première partie du réseau de communication (5a) est constitué par l'internet et **en ce que** la deuxième partie du réseau de communication (5b) est constituée par un réseau de télécommunication filaire fixe ou par un réseau de radiocommunication mobile.
